Europäisches Patentamt

European Patent Office

Office européen des brevets

(19)

(11) Publication number: **0 168 166**
**B1**

(12) **EUROPEAN PATENT SPECIFICATION**

(45) Date of publication of patent specification: **11.10.89**

(51) Int. Cl.⁴: **H 02 M 3/338**

(21) Application number: **85304036.8**

(22) Date of filing: **06.06.85**

(54) DC power supply.

(30) Priority: **07.06.84 US 618219**

(43) Date of publication of application:
**15.01.86 Bulletin 86/03**

(45) Publication of the grant of the patent:
**11.10.89 Bulletin 89/41**

(84) Designated Contracting States:
**DE FR GB**

(56) References cited:
**EP-A-0 058 035**
**WO-A-85/00939**
**DE-A-1 952 016**
**FR-A-2 533 775**
**US-A-3 414 798**

(73) Proprietor: **Dao, Kim**
**12 Nace Avenue**
**Piedmont California 94611 (US)**

(72) Inventor: **Dao, Kim**
**12 Nace Avenue**
**Piedmont California 94611 (US)**

(74) Representative: **Calderbank, Thomas Roger**
**et al**
**MEWBURN ELLIS & CO. 2/3 Cursitor Street**
**London EC4A 1BQ (GB)**

Courier Press, Leamington Spa, England.

EP 0 168 166 B1

# EP 0 168 166 B1

**Description**

The present invention relates to power supplies and more particularly, to a power supply for producing a precise constant output irrespective of variations in the AC input voltage provided thereto and irrespective of changes in the load.

A number of power supply arrangements are presently commercially available to provide a precise output irrespective of the variations in AC input voltage and changes in the load. As disclosed in U.S. Patent 3,414,798 issued to Jorgen L. Nielsen December 3, 1968, one type of power supply is a switching device for selectively turning on and off the input voltage. In this power supply the input voltage is provided to rectifying and filtering networks which develop the desired output voltages. A feedback control loop samples the output of the power supply and provides the sampled voltage output to a comparison circuit which comprises the sampled output with a reference voltage. A control signal is developed by the comparison circuit which is used to operate the switching device to switch on and off the input voltage at a rate to make the output voltage constant.

WO 85/00939, which is prior art within the terms of Art 54(3) EPC discloses a DC power supply in which the output voltage is compared with a reference voltage and a resulting voltage controls the duty cycle of the oscillator coupled to the primary windings of the device.

The prior art power supplies, however, have disadvantages in that generally it is more difficult to sample voltage output as voltage and make comparison thereof than to sample voltage outputs as current and make comparison thereof. Further such prior art devices provide no compensating signal to the reference source to compensate for the error signal. Also there is generally no consideration given to synchronizing the timing of switching on the input voltage at the same point in the cycle thereof in order to provide a precise voltage output.

The present invention is directed to overcoming the disadvantages of the prior art.

The invention, underlying this application is claimed in claims 1, 4 and 18.

Preferred embodiments concerning the current means are recited in claim 1, concerning the synchronizing means are recited in claim 4 and concerning the trigger means are recited in claim 18.

In the drawings:

Figure 1 is an embodiment of the power supply of the invention.

Figure 2 is a graph showing the charging cycle of the voltage buildup and transfer means of the invention.

Figure 3 shows a simplified representation of the sensing circuit of the invention.

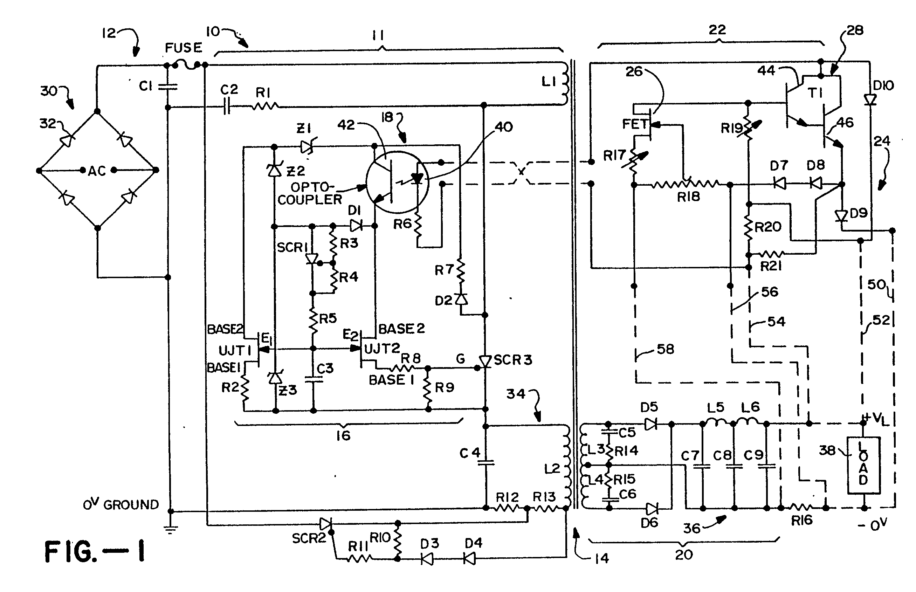

With reference to the figures, and in particular to Figure 1, an embodiment of the Power Supply 10 of the invention is depicted which can be used, for example, to power a microprocessor requiring a steady 5-volt DC input. Power supply 10 includes the following subcomponents: high voltage input circuit 11 comprising AC power input circuitry 12 and charge buildup and transfer circuitry 14, triggering circuit 16 including opto-coupler 18, output filter and load circuitry 20, and sensing circuit 22 including protection circuit 24.

In a preferred embodiment, the individual components are identified and valued as follows:

Capacitors

$C_1$: 1050 microfarads; 330 WVDC, electrolytic
$C_2$: 0.0022 microfarad; 600 WVDC
$C_3$: 0.015 microfarad; 50 WVDC
$C_4$: 0.057 microfarad; 1600 WVDC
$C_5$: 0.33 microfarad; 100 WVDC
$C_6$: 0.33 microfarad; 100 WVDC
$C_7$: 6200 microfarads; 16 VDC; Mallory VPR622V016L3C
$C_8$: 6200 microfarads; 16 VDC; Mallory VPR622V016L3C
$C_9$: two $C_8$ capacitors in parallel

Resistors

$R_1$: 200 ohm, 5 watt
$R_2$: 30 ohm, 1/8 watt
$R_3$: 15 K-ohm, 1/8 watt
$R_4$: 1 K-ohm, 1/8 watt
$R_5$: 470 K-ohm, 1/8 watt
$R_6$: 47 ohm, 1/2 watt
$R_7$: 12 K-ohm, 5 watt
$R_8$: 70 ohm, 1/8 watt
$R_9$: 470 ohm, 1/8 watt
$R_{10}$: 100 ohm, 1/8 watt
$R_{11}$: 40 ohm, 1/8 watt
$R_{12}$: 0.5 ohm, 14 watt
$R_{13}$: 0.05 ohm, 5 watt

2

EP 0 168 166 B1

$R_{14}$: 1.3 ohm, 2 watt
$R_{15}$: 1.3 ohm, 2 watt
$R_{16}$: 0.001 ohm, short segment of 18 gauge wire
$R_{17}$: 500 ohm, 1/4 watt potentiometer
$R_{18}$: 1000 ohm potentiometer, 1/8 watt
$R_{19}$: 25 K-ohm potentiometer adjusted to 6.8 K-ohm, 1/8 watt
$R_{20}$: 120 ohm, 1/8 watt
$R_{21}$: 470 ohm, 1/8 watt

Inductors
$L_5$: Toroidal Permalloy (molybdenum) powder core, about 0.4 microhenrys
$L_6$: Toroidal Permalloy (molybdenum) powder core, about 0.2 microhenrys


Transformer: Toroidal powder core
Core: Arnold Engineering A123068-2
$L_1$: 36 turns, #16 wire; closely wound in 2 layers of 18 turns each
$L_2$: 171 turns, #16 wire; uniformly wound around the core in 2 layers
$L_3$: 5 turns, #10 wire; closely wound in one layer, located opposite $L_1$
$L_4$: 5 turns, #16 wire; 3 coils connected in parallel, covering approximately one-third the core circumference opposite $L_1$


Zener diodes
$Z_1$: 6.2 volt Zener, 1 watt
$Z_2$: 5.1 volt Zener, 1 watt
$Z_3$: 13 volt Zener, 1 watt

Diodes
$D_1$: IN914
$D_2$: SK9000 (RCA)
$D_3$: IN914
$D_4$: IN914
$D_5$: VARO:VSK231
$D_6$: VARO:VSK231
$D_7$: IN914
$D_8$: IN914
$D_9$: IN914
$D_{10}$: IN914


Silicone controlled rectifiers (thyristors)
$SCR_1$: SK3627
$SCR_2$: MCR 3918-6
$SCR_3$: SK3042


Unijunction transistors
UJT1: ECG 6409 (Sylvania)
UJT2: ECG 6409 (Sylvania)


Opto-couplers 18: ECG3040
NFET 26: Radio Shack Cat. No. 276—1734, adjustable current source
$T_1$: Darlington transistor NPN, Radio Shack Cat. No. 276—2060

High voltage input circuit
The high voltage input circuit 11 includes a full wave rectifier bridge 30 which includes four diodes such as diode 32. The rectifier bridge 30 rectifies a 120V AC line. Rectifier 30 is provided in parallel with a capacitor $C_1$. Capacitor $C_1$ becomes a DC source of unregulated voltage $V_{c1}$ (about 150 volts DC). The high voltage input circuit 11 further includes a transformer coil $L_1$ which is connected in series with capacitor $C_1$ and which communicates through a thyristor $SCR_3$ to the main charging capacitor $C_4$. The other terminal of $C_4$ is connected to the ground end of capacitor $C_1$. The charge buildup and transfer circuit 14 include capacitor $C_4$ and transformer coil $L_2$ which define a tank circuit 34 that transfers power to transformer coils $L_3$ and $L_4$ as will be explained below.
Initially the voltage $V_{c4}$ across capacitor $C_4$ is zero. At time zero the $SCR_3$ is triggered by a current pulse from trigger circuit 16 through the gate G. The line connecting transformer coil $L_1$ to capacitor $C_4$ is now closed. The current charging capacitor $C_4$ through transformer coil $L_1$ builds up sinusoidally in time until $V_{c4}$ peaks (at about 300 V). At this time the current reverses with capacitor $C_4$ now trying to charge capacitor $C_1$. This reverse current flows for a short time until thyristor $SCR_3$ stops conducting. Capacitor $C_4$ is now isolated from capacitor $C_1$ and transformer coil $L_1$.

3

Capacitor $C_4$ starts discharging through transformer coil $L_2$. In fact, capacitor $C_4$ starts discharging through transformer coil $L_2$ even during the charging of capacitor $C_4$, but because transformer coil $L_2$ is much larger than transformer coil $L_1$, the current through coil $L_2$ is smaller, therefore allowing the voltage $V_{C4}$ of capacitor $C_4$ to remain higher than $V_{C1}$ across capacitor $C_1$ for a long enough period to allow thyristor $SCR_3$ to turn off. During the charging and the discharging of capacitor $C_4$, whenever the biasing permits, diode $D_5$ will conduct current to the filtering and load circuits 20.

Eventually, due to the tank circuit 34 formed by capacitor $C_4$ and coil $L_2$, the voltage $V_{C4}$ across capacitor $C_4$ will go negative up to a voltage that permits diode $D_6$ to conduct current to the filtering and load circuits 20. The thyristor $SCR_3$ remains turned off.

The tank circuit 34 can continue to oscillate, transferring decreasing amounts of energy alternatively through diodes $D_5$ and $D_6$. The currents through diodes $D_5$ and $D_6$ and the voltage across coils $L_3$ and $L_4$ are averaged out by the inductors $L_5$ and $L_6$ and capacitors $C_7$, $C_8$ and $C_9$ which comprise the output filter 36 of filter and load circuitry 20.

It is to be understood that protection is provided by snubbers comprised of resistor $R_1$ and capacitor $C_2$, and also resistor $R_{14}$ and capacitor $C_5$, and also resistor $R_{15}$ and capacitor $C_6$.

The triggering circuit

The triggering circuit 16 is provided in order to trigger the charging of capacitor $C_4$ by coil $L_1$ to maintain a constant voltage across the load. The trigger circuit 16 receives an input from the sensing circuit 22 which is proportional to the difference between the desired reference voltage $V_{ref}$ and the voltage provided to the load as measured by a current comparison. This input is in the form of a current which is directly proportional to the size of the voltage difference which is provided to the light emitting diode 40 of opto-coupler 18. This current controls the timing of the triggering of thyristor $SCR_3$.

The basic elements of the triggering circuit include opto-coupler 18, unijunction transistor $UJT_2$, capacitor $C_3$, Zener diode $Z_3$, diode $D_2$, thyristor $SCR_3$ and resistors $R_7$, $R_8$ and $R_9$. Opto-coupler 18, resistor $R_7$ and diode $D_2$ provide communication between capacitor $C_1$ and base 2 of transistor $UJT_2$. Base 1 of transistor $UJT_2$ is communicated to the gate G of thyristor $SCR_3$ through resistor $R_8$ and with ground through resistors $R_8$ and $R_9$ and capacitor $C_4$. The series combination of resistor $R_5$ and capacitor $C_3$ is provided in a parallel arrangement with Zener diode $Z_3$. This parallel arrangement is communicated between capacitor $C_1$ with other elements such as thyristor $SCR_1$ and resistors $R_3$, $R_4$ which will be discussed below, and ground.

The interconnection between resistor $R_5$ and capacitor $C_3$ communicates with the emitter $E_2$ of transistor $UJT_2$. Transistor $UJT_2$ is constructed such that when the voltage applied to emitter $E_2$ rises to a certain ratio (intrinsic ratio) of the voltage applied to base 2, the resistance between emitter and base 1 of transistor $UJT_2$ become very small, allowing capacitor $C_3$ to discharge across transistor $UJT_2$. The greater the current from the sensing circuit 22 passing through opto-coupler 18, the higher the voltage at base 2 of transistor $UJT_2$, and the larger capacitor $C_3$ must charge before the intrinsic ratio is reached.

Assume the voltage across capacitor $C_4$ $(V_{C4})$ is higher than the voltage across the series combination of coil $L_1$ and $C_1$ $(V_{L1})$, the voltage across the triggering circuit 16 is essentially zero because diode $D_2$ is reverse biased, and capacitor $C_3$ is completely discharged. In Figure 1, capacitor $C_4$ communicates with diode $D_2$ through zener diodes $Z_1$, $Z_2$, $Z_3$ and resistor $R_7$. Thus as $V_{C4}$ decreases with respect to $V_{L1}$, eventually diode $D_2$ is forward biased, and current starts charging up capacitor $C_3$ and immediately sets the voltage across Zener diode $Z_3$ to a maximum voltage $V_{Z3}$. Given sufficient time, the voltage across $C_3$ $(V_{C3})$ will rise to $V_{Z3}$. When capacitor $C_3$ has a voltage high enough, emitter $E_2$ of transistor $UJT_2$ will conduct and discharge capacitor $C_3$ through the gate G of thyristor $SCR_3$ triggering the charging of capacitor $C_4$. As thyristor $SCR_3$ conducts, the voltage across the triggering circuit 16 and the voltage across Zener diode $Z_3$ $(V_{Z3})$ again drops essentially to substantially zero. This fact resets the transistor $UJT_2$ very fast for the next triggering and allows resistor $R_5$ to be small for a fast charging of capacitor $C_3$. Resistor $R_5$ can be much smaller than would be possible if $V_{Z3}$ is set constant.

The object of regulation is to maintain a constant voltage $V_L$ across the load 38. When the load demands more energy (for instance the load resistance is lowered), the triggering of thyristor $SCR_3$ must occur more frequently (running at a higher frequency), and/or the voltage $V_{C4}$ must be charged to a higher value.

In this power supply 10, a single control modulates both frequency and charged voltage $V_{C4}$. Since both frequency and voltage are controlled, the frequency need not change very much from full load to almost zero load. In fact the frequency need only change from about 30 KHz to 15 KHz.

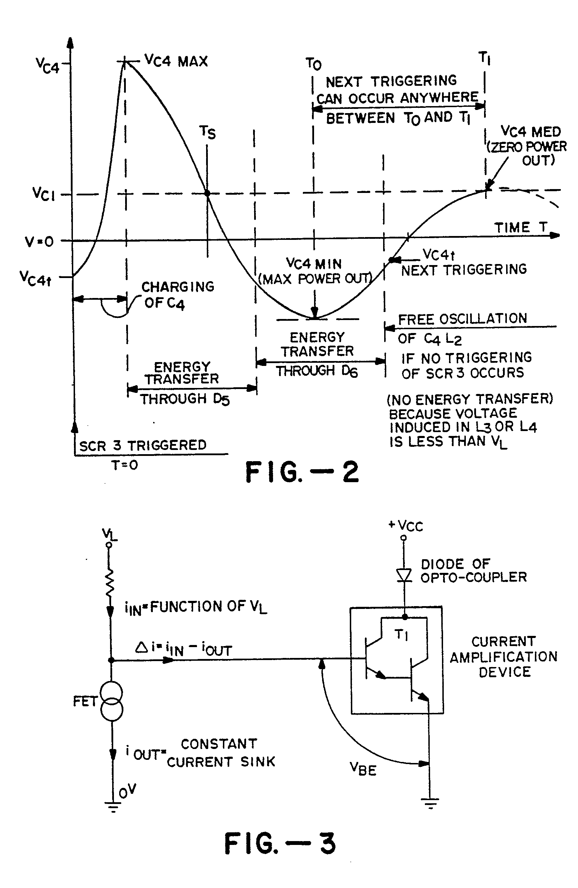

Figure 2 shows the thyristor $SCR_3$ initially being triggered at time $t=0$ and how the voltage $V_{C4}$ (measured with reference $V=0$ volts at the ground end of capacitor $C_1$) varies with time. The energy transferred to the load during the charging of capacitor $C_4$ has been neglected.

The next triggering of thyristor $SCR_3$ can occur any time from $t=T_0$ (when $V_{C4}$ reaches a minimum) to $t=T_1$ (when $V_{C4}$ reaches a second maximum $V_{C4med}$ in the free oscillation zone or when $V_{C4}=V_{C1}$, whichever comes first). The maximum charged voltage of capacitor $C_4$, $V_{C4max}$, depends on where the triggering occurs. If $V_{C4t}$ is the algebraic value of $V_{C4}$ at triggering time, then:

$$V_{C4max} \cong 2V_{C1} - V_{C4t}$$

EP 0 168 166 B1

The energy transferred per cycle is thus:

$$\tfrac{1}{2}C_4(V^2_{C4max}-V^2_{C4t})=2C_4V_{C1}(V_{C1}-V_{C4t})$$

Maximum power occurs at $V_{C4t}=-V_{C4min}$ and zero power occurs and $V_{C4t}=+V_{C1}$.

The time $T_S$ where the charging of capacitor $C_3$ of the triggering circuit 16 begins is always synchronized with the $V_{C4}$ waveform because $V_{C3}$ remains zero from the last triggering up to $T_S$ (where $V_{C4}$ begins to be lower than $V_{C1}$). The charging of $C_3$ also follows a fixed pattern in time because resistor $R_5$ and capacitor $C_3$ and the voltage $V_{Z3}$ at Zener diode $Z_3$ are constants during this charging. The timing for the next triggering is done by varying the base 2 voltage of transistor $UJT_2$ which depends on how much current is fed to it from transistor 42 of opto-coupler 18.

The amount of current flowing through the diode 40 of the opto-coupler 18 comes from the sensing circuit 22 (discussed below). The larger the current, the longer it takes capacitor $C_3$ to build up a charge which is equal to the intrinsic ratio times the voltage at base 2 of transistor $UJT_2$ and the larger the interval before thyristor $SCR_3$ is triggered, and thus (Figure 2) the lower the power output to output filter and load circuit 20. Thus in this embodiment the rate of charging of capacitor $C_3$ is a constant and the voltage at base 2 of transistor $UJT_2$ is varied with time, depending on the signal from the sensing circuit 22. A diode $D_1$ is used to assure that $V_{base2}$ of transistor $UJT_2$ never goes below $V_{Z3}$ where improper triggering of transistor $SCR_3$ may occur (i.e., insufficient voltage to turn on transistor $SCR_3$).

Expanding on the above triggering circuit 16 in Figure 1, series resistors $R_3$ and $R_4$ are provided in parallel with thyristor $SCR_1$, with the gate of thyristor $SCR_1$ communicating with the interconnection between resistors $R_3$ and $R_4$. This parallel arrangement between resistors $R_3$, $R_4$ and thyristor $SCR_1$ communicates capacitor $C_1$ with resistor $R_5$ and capacitor $C_3$ via diode $D_2$, resistor $R_7$ and Zener diodes $Z_1$, $Z_2$.

At start up, when the input capacitor $C_1$ is charging up, the rate of increase of $V_{C1}$ is slow, of the order of the AC line frequency times the line voltage. The first discharge of capacitor $C_3$ through the emitter of transistor $UJT_2$ will occur at low voltage if $R_5$ is too small (as is desirable for other than start-up). This will not trigger thyristor $SCR_3$, therefore the transistor $UJT_2$ may not reset.

At start-up there must be a large resistor $R_3$ in series with resistor $R_5$ to slow down the charging of capacitor $C_3$, allowing time for the voltage at the base $B_2$ of the transistor $UJT_2$ to grow large enough for the triggering of thyristor $SCR_3$. But resistor $R_3$ must drop out during normal operation. This is achieved with transistor $SCR_1$.

After the first discharge, the thyristor $SCR_1$ will be turned on at the next charging of capacitor $C_3$ because the current through resistor $R_3$ is then large enough to turn on thyristor $SCR_1$, thus bypassing resistor $R_3$. Since the turn-off time of thyristor $SCR_1$ is chosen to be large, $SCR_1$ is essentially on all the time after the first shooting of capacitor $C_3$.

A unijunction transistor $UJT_1$ is also provided with base 2 thereof communicating with the series interconnection between Zener diode $Z_1$ and $Z_2$ and base 1 connecting with resistor $R_2$. The emitter $E_1$ of transistor $UJT_1$ communicates with the series interconnection between resistors $R_5$ and capacitor $C_3$ and thus with the emitter $E_2$ of transistor $UJT_2$.

In practice, thyristor $SCR_3$ may not turn off when it is triggered at $V_{C4}$ too close to $V_{C1}$ (Figure 2). Therefore capacitor $C_3$ has to be discharged by some means when the voltage $V_{base2}$ of transistor $UJT_2$ imposes a triggering time where $V_{C4t}$ is too close to $V_{C1}$ (around $V_{C4med}$ in Figure 2).

The value of resistor $R_7$ is chosen such that thyristor $SCR_3$ cannot be turn-on when $V_{C4t}$ is near $V_{C1}$. At a low value for $V_{C1}-V_{C4}$, the current through resistor $R_7$ is primarily channelled into the transistor $UJT_2$ because $V_{Z1}+V_{Z2}+V_{Z3}$ is higher than the base 2 voltage of $UJT_2$ (the impedances of the Zener diodes $Z_1$, $Z_2$ and $Z_3$ are at this point very large). Resistor $R_7$ allows only enough current to maintain $V_{base2}$ of transistor $UJT_2$ high, preventing the discharge of capacitor $C_3$ to thyristor $SCR_3$. The $V_{base2}$ of transistor $UJT_1$, on the other hand, is deprived of current and fully conducts as the emitter voltage is greater than the intrinsic ratio times the voltage at base 2, discharging capacitor $C_3$ into resistor $R_2$.

It is to be understood that over current protection for thyristor $SCR_3$ is provided by thyristor $SCR_2$ and resistors $R_{10}$, $R_{11}$, $R_{12}$, $R_{13}$ and diodes $D_3$, $D_4$. As shown in Figure 1, resistors $R_{12}$, $R_{13}$ are provided in tank circuit 34 with thyristor $SCR_2$ and resistor $R_{10}$, $R_4$ and diodes $D_3$, $D_4$ connected between tank circuit 34 and capacitor $C_1$.

It is also to be understood that unwanted voltage fluctuations that can degrade the operation of opto-coupler 18 can be bypassed by connecting the base of its transistor 42 to the interconnection between capacitor $C_3$ and Zener diode $Z_3$ (i.e. ground end of $C_3$) by a series combination of a resistor (larger than 0.5 megaohm) and a capacitor (less than 150 picofarad). Some opto-couplers are less sensitive to these voltage fluctuations than others and may not need the bypassing connection described above.

The sensing circuit

The sensing circuit 22 provides a current to opto-coupler 18 that is proportional to the difference between the desired or reference voltage $V_{ref}$ across the load and the actual voltage across the load $V_L$ as measured by a current comparison discussed below. The sensing circuit 22 is principally comprised of resistors $R_{16}$, $R_{17}$, $R_{18}$ and $R_{19}$, transistor or NFET 26 and a current amplification device $T_1$ comprised of

5

transistor pair 28. Resistor $R_{16}$ is provided in communication with the load 38 so as to sense the current through load 38 returning to the power supply 10. Potentiometer or Resistor $R_{18}$ is provided in parallel with resistor 16 and thus sees the same voltage as does resistor $R_{16}$. The gate of transistor NFET 26 is connected to resistor $R_{18}$ with the drain connected to potentiometer or resistor $R_{17}$ which is connected to one end of resistor $R_{18}$. The source of transistor NFET 26 is connected to potentiometer or resistor $R_{19}$ and the base of the first transistor 44 in current amplification device $T_1$. The other terminal of resistor $R_{19}$ communicates with the positive terminal to which the load 38 is connected. Device $T_1$ is comprised of two transistors 44, 46, the collectors of which communicate with the diode 40 of opto-coupler 18, and the emitter of the first transistor 44 communicates with the base of the second transistor 46. The emitter of the second transistor 46 communicates with the negative terminal (ground) to which the load 38 is connected.

A simplified representation of the sensing circuit 22 is depicted in Figure 3. If the $V_{BE}$ of current amplification device $T_1$ can be considered constant, then:

$$i_{in}=(V_L-V_{BE})/R_{19},$$

a linear function of $V_L$.

Since $i_{out}$ is constant, the difference $\Delta i$ can be set to be proportional to $(V_L-V_{constant})$ where $V_{constant}$ is some reference point adjustable by the value of $i_{out}$:

$$\Delta i=i_{in}-i_{out}$$

thus:

$$\Delta i=\frac{V_L-V_{BE}}{R_{19}}-\frac{i_{out}R_{19}}{R_{19}}=\frac{1}{R_{19}}(V_L-(V_{BE}+i_{out}R_{19})$$

where:

$$V_{BE}+i_{out}R_{19}=V_{reference}.$$

After amplification of $\Delta i$, the current through the diode 40 of the opto-coupler 18 is roughly proportional to the deviation of $V_L$ from $V_{reference}$. The signal from diode 40 creates a current through the transistor 42 of the opto-coupler 18 that is roughly proportional to $\Delta i$. This current is fed to the interbase resistance (through base 2) of transistor $UJT_2$, creating an almost proportional $V_{base2}$ of transistor $UJT_2$. This $V_{base2}$, in turn, determines when the next triggering of thyristor $SCR_3$ and will occur as explained above.

One way to improve the regulation is to vary the reference current ($i_{out}$) by an amount that is proportional to the load to offset the necessary $\Delta i$ that is needed for regulation. It is convenient to use $\Delta i$ itself as information on the load to change $i_{out}$, but this is unstable feedback. Therefore, an independent source of information on the load must be used to change $i_{out}$ as the load changes.

This is where the resistance $R_{16}$ comes into play. $R_{16}$ essentially senses the current returning from the load 38 to the power supply. The voltage drop across $R_{16}$ is proportional to the load power demand (since $V_L$ is constant). Now, the use of current reference (instead of the traditional voltage reference) by means of a field effect transistor provide a method of adding more current to the reference $i_{out}$ proportionally to the load as shown in Figure 1. In Figure 1, resistor $R_{18}$ is a potentiometer that biases the right amount of voltage from $R_{16}$ to the gate of transistor NFET 26 to exactly offset the $\Delta i$ used for regulation. The $\Delta i$ is still there, but it is on top of a higher reference $i_{out}$ such that the resulting $V_L$ remains unchanged and thus is not load dependent as this load changes.

The remaining portion of sensing circuit 22 includes diodes $D_7$, $D_8$, $D_9$ and $D_{10}$ along with resistors $R_{20}$ and $R_{21}$. These components protect the power supply, should the user improperly connect lines 50 and 52.

Because physical location of the load 38 and connections thereto varies with use, the sensing lines 50, 52 connecting diode $D_9$ and resistor $R_{19}$ to the load 38 cannot be permanently connected. Therefore user mistakes may occur, such as: (a) the user may forget to connect them to the load, or (b) the connections may be loose, or (c) the connecting lines may be broken, or (d) the connections may be to the wrong polarities. In these cases the power supply and the load must be protected from overvoltage because the power supply may run at maximum power if the sensing circuit is not connected properly.

Protection is thus provided for by $R_{20}$, $R_{21}$, $D_7$, $D_8$, $D_9$ and $D_{10}$ as follows.

If the positive line 52 is not connected to resistor $R_{19}$, the sensing circuit 22 will sense the output voltage at capacitor $C_9$ instead, through resistor $R_{20}$, which is connected to capacitor $C_9$ by line 54. The regulation is then for $V_{C9}$.

If the negative line 50 is not connected to diode $D_9$, then the current through the opto-coupler 18 will return to the ground of capacitor $C_9$ through diodes $D_7$ and $D_8$ and line 56. Regulation is now for $V_L$ with the ground shifted by approximately one forward voltage of a diode. That is, $V_L$ is not held constant at $V_{reference}$ but at approximately $V_{reference}+V_{Fdiode}$.

# EP 0 168 166 B1

If the polarities of the lines 50, 52 are reversed, then diode $D_9$ will block or isolate the positive line 52, and diode $D_{10}$ will return the current through the diode 40 of the opto-coupler 18 to the negative line 50. Since this current is now fairly large, the output power will be very small, depressing $V_L$ to a low voltage.

Diode $D_9$ serves an additional purpose. That is, for increasing the source voltage of transistor NFET 26 so that it can operate properly. To maintain diode $D_9$ at a constant voltage drop, resistor $R_{21}$ is used to feed a large current through it.

Further in this sensing circuit 22, potentiometer $R_{17}$ is used for the adjusting of $V_L$ (and thus also $i_{out}$) in the range of from 4 volts to 8 volts.

It is to be understood that power source 10 can be made programmable to provide a programmable voltage output by replacing the constant current sink by a programmable current sink. The power supply can additionally be made to have a constant current output by replacing resistor $R_{19}$ by a constant current source such as a field effect transistor.

It also can be appreciated that low voltage rated SCRs can be used for higher input voltage if the voltage is divided and several charge buildup and transfer circuits, such as circuit 14, are provided in parallel across each portion of the divided input.

Industrial applicability

The operation of the power supply 10 of the invention is as follows. A fully rectified voltage signal is provided to transformer coil $L_1$. The voltage thereacross is transferred to capacitor $C_4$ of tank circuit 34 when thyristor $SCR_3$ is turned on by the trigger circuit 16. When this occurs, the charge is built up across capacitor $C_4$, and that power is transferred through transformer coil $L_2$ to transformer coils $L_3$ and $L_4$ and therefrom to load 38. Sensing circuit 22 senses the output to the load 38 and provides a signal through opto-coupler 18 to the trigger circuit 16 in order to control the timing of the opening of thyristor $SCR_3$.

Other aspects and objects of the invention can be obtained from a review of the claims and the figures appended hereto.

**Claims**

1. A power supply for providing a DC output voltage to a load (38) comprising:
   voltage input means (11) for providing input voltage;
   charge buildup and transfer means (14) for building up and transferring an output to a load (38);
   switch means (SCR3) for selectively interconnecting the voltage input means (11) and the charge buildup and transfer means (14);
   trigger means (16) for triggering the switch means (SCR3) to interconnect the voltage input means (11) and the charge buildup and transfer means (14),
   sensing means (22) for sensing current in response to the DC output voltage across the load (38);
   a compensated current reference means for providing a current reference;
   said sensing means (22) having means for comparing the current sensed by the sensing means to the current reference; and
   signal means for providing a signal based on the comparison between the current sensed and the current reference to the trigger means (16) so as to modify the triggering of the switch means (SCR3) and the interconnection of voltage input means (11) and the charge buildup and transfer means (14).

2. The power supply of claim 1 wherein:
   said sensing means (22) includes a first resistor (R19) provided in communication with the load and a current amplification device (T1) communicating with the first resistor (R19) and with ground and with the signal means (40); and
   wherein said compensated current reference means includes a current sink connected to the connection between said first resistor (R19) and said current amplification device (T1).

3. The power supply of claim 2 including:
   a second resistor (R16) connected between the load (38) and the power supply to sense the current returning to the power supply from the load (38);
   a third resistor (R18) provided in parallel with the second resistor (R16);
   the current sink including a transistor communicating with the first resistor (R19) with the transistor having a gate that is biased by the voltage at said third resistor (R18).

4. A power supply for providing a DC output voltage to a load comprising:
   voltage input means (11) for providing input voltage;
   charge buildup and transfer means (14) for building up and transferring a charge;
   rectifier and filter means (20) for receiving the charge from the charge buildup and transfer means (14) and for providing an output to a load (38);
   switch means (SCR3) for selectively interconnecting the voltage input means (11) and the charge buildup and transfer means (14);
   reference means for providing a reference;
   sensing means (22) for sensing the output and for comparing the output to the reference;
   signal means for providing a signal based on the comparison between the output and the reference;

7

trigger means (16) for turning on the switch means (SCR3) to interconnect the voltage input means (11) and the charge buildup and transfer means (14);

wherein said trigger means includes a threshold means (UJT2) for providing a threshold signal, and means (C3) for building up a time-dependent signal to a level relative to the threshold signal such that said trigger means (15) turns on said switch means (SCR3), wherein at least one of said threshold means and said means for building up a time dependent signal (C3) is provided with the signal from the signal means; and

means (D2, R7, Z1, Z2) for synchronizing the starting of the means (C3) for building up a time-dependent signal so that the starting occurs at a preselected point on the cycle of voltage oscillation in the charge buildup and transfer means (14).

5. A power supply of claim 4 wherein:

said synchronizing means (D2, R7, Z1, Z2) starts the means (C3) for building up a time-dependent signal at the preselected point when the voltage across the charge buildup and transfer means is substantially equivalent to the voltage of the voltage input means (11).

6. The power supply of claim 4 wherein:

said means (D2, R7, Z1, Z2) for synchronizing the starting of the means for building up a time-dependent signal includes a diode (D2) provided in parallel therewith which interconnects the voltage input means (11) and the charge buildup and transfer means (14) such that when said diode (D2) conducts said time-dependent signal starts building up.

7. The power supply of claim 4 wherein:

said voltage input means (11) includes a first transformer coil (L1) and first means (11) for applying a voltage to said first transformer coil (L1);

said charge buildup and transfer means (14) includes a second transformer coil (L2) and second means (C4) for applying a voltage across said second transformer coil (L2); and

said switch means (SCR3) includes means for selectively interconnecting said first transformer coil (L1) to said second means (C4) for applying a voltage across said second transformer coil (L2).

8. The power supply of claim 7 wherein:

said switch means includes a thyristor (SCR3).

9. The power supply of claim 7 wherein:

said first transformer coil (L1) and said second transformer coil (L2) are provided on the same transformer core.

10. The power supply of claim 4 wherein:

said voltage input means includes a first transformer coil (L1) and first means (11) for applying a voltage to said first transformer coil (L1);

said charge buildup and transfer means (14) includes a second transformer coil (L2) and second means (C4) for applying a voltage across said second transformer coil (L2);

said switch means (SCR3) includes a thyristor (SCR3) that selectively interconnects said first transformer coil (L1) to said second means (C4) for applying a voltage across said second transformer coil said thyristor (SCR3) being turned off when the voltage buildup on the second means (C4) for applying a voltage across said second transformer (L2) is larger than the voltage across the first means (11) for applying voltage.

11. The power supply of claim 4 including:

means (SCR1) for slowing the charging of the means (14) for building up a time-dependent signal at startup so that the voltage of the threshold means can build up to the threshold voltage level to turn on the switch means (SCR3).

12. The power supply of claim 11 wherein:

said means (SCR1) for slowing the charging of the means (14) for building up a time-dependent signal includes a thyristor (SCR1) provided in parallel with a first resistor (R3) both interconnecting said voltage input means to said means for building up a time-dependent signal, said thyristor (SCR1) including a gate connected to a terminal of said first resistor (R3) which terminal is also connected to said means (14) for building up a time-dependent signal;

said first resistor (R3) slowing the changing of the means (14) for building up a time-dependent signal at start-up of the power supply until the voltage at the gate builds up to a point that the thyristor is turned on, bypassing the first resistor (R3).

13. The power supply of claim 4 wherein:

said sensing means (22) includes a first resistor (R19) provided in communication with the load;

said reference means including a current sink connected to said first resistor (R19) and

said sensing means (22) further includes a current amplification device (T1) communicating with the connection between the current sink and the first resistor (R19) and with ground and with the signal means.

14. The power supply of claim 13 wherein said current amplification device includes at least one transistor (44) with the base thereof communicating with the interconnection between the first resistor (R19) and the constant current sink, the emitter connected to a ground and the collector connected to said signal means.

15. The power supply of claim 13 including:

a second resistor (R16) connected between the load (38) and the power supply to sense the current returning to the power supply from the load (38);

a third resistor (R18) provided in parallel with the second resistor (R16) and

the current sink including a transistor communicating with the first resistor (R19) with the transistor having a gate that is biased by the voltage at said third resistor (R18).

16. The power supply of claim 4 including:

means for discharging the means for building up a time dependent signal when the voltage across said charge buildup and transfer means (14) is close to the voltage at the voltage input means (11) so that the switch means (SCR3) remains turned off.

17. The power supply of claim 16 wherein said means for discharging the means (C3) for building up a time dependent signal includes:

a first resistor (R7) and a second resistor (R2);

a first unijunction transistor (UJT1) with an emitter thereof connected to the threshold means and one terminal of the means (C3) for building up a time dependent signal;

said first resistor (R7) connected between the voltage input means (11) and a base of the first unijunction transistor (UJT1) and said second resistor (R2) connected between another base of the first unijunction transistor (UJT1) and another terminal of the means (C3) for building up a time dependent signal.

18. A power supply for providing a DC output voltage to a load comprising:

voltage input means (11) for providing input voltage;

charge buildup and transfer means (14) for building up and transferring an output to a load (38);

switch means (SCR3) for selectively interconnecting the voltage input means (11) and the charge buildup and transfer means (14);

trigger means (16) for triggering the switch means (SCR3) to interconnect the voltage input means (11) and the charge buildup and transfer means (14);

reference means for providing a reference;

sensing means (22) for sensing the output and having means for comparing the output to the reference;

signal means for providing a signal based on the comparison between the output and the reference to the trigger means so as to modify the triggering of the switch means (SCR3) and the interconnection of voltage input means (11) and the charge buildup and transfer means (14);

wherein said trigger means (16) includes a unijunction transistor gating circuit having a voltage buildup circuit means for building up a voltage responsive to a voltage across said switch means such that when said trigger means triggers said switch means to conduct, the voltage of the voltage buildup circuit collapses.

## Patentansprüche

1. Netzgerät zur Lieferung einer gleichgerichteten Ausgangsspannung an eine Last (38) mit

einer Spannungseingangseinrichtung (11) zur Lieferung einer Eingangsspannung,

einer Ladungsaufbau- und Übertragungseinrichtung (14) zum Aufbauen und Übertragen eines Ausgangs an eine Last (38),

einer Schaltereinrichtung (SCR3) zum selektiven Zusammenschalten der Spannungseingangseinrichtung (11) und der Ladungsaufbau- und Übertragungseinrichtung (14),

einer Triggereinrichtung (16) zur Triggerung der Schaltereinrichtung (SCR3) zum Zusammenschalten der Spannungseingangseinrichtung (11) und der Ladungsaufbau- und Übertragungseinrichtung (14),

einer Erfassungseinrichtung (22) zur Stromerfassung ansprechend auf die gleichgerichtete Ausgangsspannung über der Last (38),

einer kompensierten Stromreferenzeinrichtung zur Lieferung eines Stromnormals,

einer in der Erfassungseinrichtung (22) vorgesehenen Einrichtung zum Vergleichen des von der Erfassungseinrichtung erfassten Stroms mit dem Stromnormal, und

einer Signaleinrichtung zur Lieferung eines auf dem Vergleich zwischen dem erfaßten Strom und dem Stromnormal beruhenden Signals an die Triggereinrichtung (16), um dadurch die Triggerung der Schaltereinrichtung (SCR3) und die Zusammenschaltung der Spannungseingangseinrichtung (11) und der Ladungsaufbau- und Übertragungseinrichtung (14) zu modifizieren.

2. Netzgerät nach Anspruch 1, bei dem

die Erfassungseinrichtung (22) einen mit der Last in Verbindung stehenden ersten Widerstand (R19) und eine mit dem ersten Widerstand (R19) und mit Erde und mit der Signaleinrichtung (40) in Verbindung stehende Stromverstärkervorrichtung (T1) aufweist, und

bei dem die kompensierte Stromreferenzeinrichtung eine an die Verbindung zwischen dem ersten Widerstand (R19) und der Stromverstärkervorrichtung (T1) angeschlossene Stromsenke aufweist.

3. Netzgerät nach Anspruch 2 mit

einem zwischen die Last (38) und das Netzgerät geschalteten zweiten Widerstand (R16) zur Erfassung des von der Last (38) zum Netzgerät zurückkehrenden Stroms,

einem parallel zum zweiten Widerstand (R16) vorgesehenen dritten Widerstand (R18),

wobei die Stromsenke einen mit dem ersten Widerstand (R19) in Verbindung stehenden Transistor aufweist und der Transistor ein durch die Spannung an den dritten Widerstand (R18) vorgespanntes Gate aufweist.

4. Netzgerät zur Lieferung einer gleichgerichteten Ausgangsspannung an eine Last mit
einer Spannungseingangseinrichtung (11) zur Lieferung einer Eingangsspannung,
einer Ladungsaufbau- und Übertragungseinrichtung (14) zum Aufbauen und Übertragen einer Ladung,
einer Gleichrichter und Filtereinrichtung (20) zum Übernehmen der Ladung von der Ladungsaufbau - Übertragungseilnrichtung (14) und zur Lieferung eines Ausgangs an die Last (38),
einer Schaltereinrichtung (SCR3) zum selektiven Zusammenschalten der Spannungseingangseinrichtung (11) und der Ladungsaufbau- und Übertragungseinrichtung (14),
einer Referenzeinrichtung zur Lieferung eines Normals,
einer Erfassungseinrichtung (22) zum Erfassen des Ausgangs und zum Vergleichen des Ausgangs mit dem Normal,
einer Signaleinrichtung zur Lieferung eines auf dem Vergleich zwischen dem Ausgang und dem Normal beruhenden Signals,
einer Triggereinrichtung (16) für die Einschaltung der Schaltereinrichtung (SCR3) zum Zusammenschalten der Spannungseingangseinrichtung (11) und der Ladungsaufbau- und Übertragungseinrichtung (14),
wobei die Triggereinrichtung eine Schwellwerteinrichtung (UJT2) zur Lieferung eines Schwellwertsignals und eine Einrichtung (C3) zum Aufbau eines zeitabhängigen Signals auf einen Pegel in Bezug auf das Schwellwertsignal derart, daß die Triggereinrichtung (15) die Schaltereinrichtung (SCR3) einschaltet, aufweist, wobei zumindest entweder die Schwellwerteinrichtung oder die Einrichtung zum Aufbauen eines zeitabhängigen Signals (C3) mit dem Signal aus der Signaleinrichtung beaufschlagt ist, und
einer Einrichtung (D2, R7, Z1, Z2) zum Synchronisieren des Starts der Einrichtung (C3) zum Aufbauen eines zeitabhängigen Signals, so daß der Start an einem vorgewählten Punkt in dem Zyklus der Spannungsschwingung in der Ladungsaufbau- und Übertragungseinrichtung (14) auftritt.

5. Netzgerät nach Anspruch 4 bei dem
die Synchronisiereinrichtung (D2, R7, Z1, Z2) die Einrichtung (C3) zum Aufbau eines zeitabhängigen Signals an dem vorgewählten Punkt startet, wenn die Spannung über der Ladungsaufbau- und Übertragungseinrichtung im wesentlichen zu der Spannung der Spannungseingangseinrichtung (11) äquivalent ist.

6. Netzgerät nach Anspruch 4, bei dem
die Einrichtung (D2, R7, Z1, Z2) zum Synchronisieren des Starts der Einrichtung zum Aufbauen eines zeitabhängigen Signals eine dazu parallel angeordnete Diode (D2) aufweist, die die Spannungseingangseinrichtung (11) und die Ladungsaufbau- und Übertragungseinrichtung (14) zusammenschaltet, so daß, wenn die Diode (D2) leitet, das zeitabhängige Signal mit dem Aufbau beginnt.

7. Netzgerät nach Anspruch 4, bei dem
die Spannungseingangseinrichtung (11) eine erste Transformatorwicklung (L1) und eine erste Einrichtung (11) zum Anlegen einer Spannung an die erste Transformatorwicklung (L1) aufweist,
die Ladungsaufbau- und Übertragungseinrichtung (14) eine zweite Transformatorwicklung (L2) und eine zweite Einrichtung (D4) zum Anlegen einer Spannung über der zweiten Transformatorwicklung (L2) aufweist, und
die Schaltereinrichtung (SCR3) eine Einrichtung zum selektiven Zusammenschalten der ersten Transformatorwicklung (L1) und der zweiten Einrichtung (C4) zum Anlegen einer Spannung über der zweiten Transformatorwicklung (L2) aufweist.

8. Netzgerät nach Anspruch 7, bei dem
die Schaltereinrichtung einen Thyristor (SCR3) aufweist.

9. Netzgerät nach Anspruch 7, bei dem
die erste Transformatorwicklung (L1) und die zweite Transformatorwicklung (L2) auf demselben Transformatorkern angeordnet sind.

10. Netzgerät nach Anspruch 4, bei dem
die Spannungseingangseinrichtung eine erste Transformatorwicklung (L1) und eine erste Einrichtung (11) zum Anlegen einer Spannung an die erste Transformatorwicklung (L1) aufweist,
die Ladungsaufbau- und Übertragungseinrichtung (14) eine zweite Transformatorwicklung (L2) und eine zweite Einrichtung (C4) zum Anlegen einer Spannung über der zweiten Transformatorwicklung (L2) aufweist,
die Schaltereinrichtung (SCR3) einen Thyristor (SCR3) aufweist, der die erste Transformatorwicklung (L1) selektiv mit der zweiten Einrichtung (C4) zum Anlegen einer Spannung über der zweiten Transformatorwicklung zusammenschaltet, wobei der Thyristor (SCR3) abgeschaltet wird, wenn der Spannungsaufbau an der zweiten Einrichtung (C4) zum Anlegen einer Spannung über der zweiten Transformatorwicklung (L2) größer ist als die Spannung über der ersten Einrichtung (11) zum Anlegen von Spannung.

11. Netzgerät nach Anspruch 4 mit
einer Einrichtung (SCR1) zur Verlangsamung des Ladens der Einrichtung (14) zum Aufbau eines zeitabhängigen Signals beim Start, so daß sich die Spannung der Schwellwerteinrichtung auf den Schwellwertspannungspegel aufbauen kann, um die Schaltereinrichtung (SCR3) einzuschalten.

12. Netzgerät nach Anspruch 11, bei dem

die Einrichtung (SCR1) zur Verzögerung des Ladens der Einrichtung (14) zum Aufbau eines zeitabhängigen Signals einen parallel zu einem ersten Widerstand (R3) vorgesehenen Thyristor (SCR1) aufweist, die beide die Spannungseingangseinrichtung mit der Einrichtung zum Aufbau eines zeitabhängigen Signals zusammenschalten, wobei der Thyristor (SCR1) ein an einen Anschluß des ersten Widerstandes (R3) angeschlossenes Gate aufweist, welcher Anschluß auch an die Einrichtung (14) zum Aufbau eines zeitabhängigen Signals angeschlossen ist,

der erste Widerstand (R3) das Laden der Einrichtung (14) zum Aufbau eines zeitabhängigen Signals beim Start des Netzgerätes verzögert, bis sich die Spannung an dem Gate auf einen Punkt aufbaut, an dem der Thyristor eingeschaltet wird und den ersten Widerstand (R34) nebenschließt.

13. Netzgerät nach Anspruch 4, bei dem

die Erfassungseinrichtung (22) einen mit der Last in Verbindung stehenden ersten Widerstand (R19) aufweist,

die Referenzeinrichtung eine an den ersten Widerstand (R19) angeschlossene Stromsenke aufweist, und

die Erfassungseinrichtung (22) ferner eine Stromverstärkervorrichtung (T1) aufweist, die mit der Verbindung zwischen der Stromsenke und dem ersten Widerstand (R19) und mit Erde und mit der Signaleinrichtung in Verbindung steht.

14. Netzgerät nach Anspruch 13, bei dem die Stromverstärkervorrichtung mindestens einen Transistor (44) aufweist, dessen Basis mit der Zusammenschaltung zwischen dem ersten Widerstand (R19) und der Konstantstromsenke in Verbindung steht, dessen Emitter an Erde angeschlossen ist und dessen Kollektor mit der Signaleinrichtung verbunden ist.

15. Netzgerät nach Anspruch 13 mit

einem zwischen die Last (38) und das Netzgerät geschalteten zweiten Transistor (R16) zur Erfassung des von der Last (38) zu dem Netzgerät zurückkehrenden Stroms,

einem parallel zu dem zweiten Widerstand (R16) angeordneten dritten Widerstand (R18) und

wobei die Stromsenke einen mit dem ersten Widerstand (R19) in Verbindung stehenden Transistor aufweist, welcher mit einem Gate versehen ist, das durch die Spannung an dem dritten Widerstand (R18) vorgespannt ist.

16. Netzgerät nach Anspruch 4 mit

einer Einrichtung zum Entladen der Einrichtung zum Aufbau eines zeitabhängigen Signals, wenn die Spannung über der Ladungsaufbau- und Übertragungseinrichtung (14) nahe der Spannung an der Spannungseingangseinrichtung (11) ist, so daß die Schaltereinrichtung (SCR3) abgeschaltet ist.

17. Netzgerät nach Anspruch 16, bei dem die Einrichtung zum Entladen der Einrichtung (C3) zum Aufbau eines zeitabhängigen Signals aufweist:

einen ersten Widerstand (R7) und einen zweiten Widersstand (R2),

einen ersten Unijunction-Transistor (UJT1) dessen Emitter an die Schwellwerteinrichtung und au einen Anschluß der Einrichtung (C3) zum Aufbau eines zeitabhängigen Signals angeschlossen ist,

wobei der ersten Widerstand (R7) zwischen die Spannungseingangseinrichtung (11) und eine Basis des ersten Unijunction-Transistors (UJT1) und der zweite Widerstand (R2) zwischen eine andere Basis des ersten Unijunction-Transistors (UJT1) und einen anderen Anschluß der Einrichtung (C3) zum Aufbau eines zeitabhängigen Signals geschaltet ist.

18. Netzgerät zur Lieferung einer gleichgerichteten Ausgangsspannung an eine Last mit

einer Spannungseingangseinrichtung (11) zur Lieferung einer Eingangsspannung,

einer Ladungsaufbau- und Übertragungseinrichtung (14) zum Aufbauen und Übertragen eines Ausgangs an eine Last (38),

einer Schaltereinrichtung (SCR3) zum selektiven Zusammenschalten der Spannungseingangseinrichtung (11) und der Ladungsaufbau- und Übertragungseinrichtung (14),

einer Triggereinrichtung (16) für eine Triggerung der Schaltereinrichtung (SCR3) zum Zusammenschalten der Spannungseingangseinrichtung (11) und der Ladungsaufbau- und Übertragungseinrichtung (14),

einer Referenzeinrichtung zur Lieferung eines Normals,

einer Erfassungseinrichtung (22) zur Erfassung des Ausgangs, die eine Einrichtung zum Vergleichen des Ausgangs mit dem Normal aufweist,

einer Signaleinrichtung zur Lieferung eines auf dem Vergleich zwischen dem Ausgang und dem Normal beruhenden Signals an die Triggereinrichtung, um dadurch die Triggerung der Schaltereinrichtung (SCR3) und die Zusammenschaltung der Spannungseingangseinrichtung (11) und der Ladungsaufbau- und Übertragungseinrichtung (14) zu modifizieren,

wobei die Triggereinrichtung (16) einen Unijunction - Transistor - Torsteuerungsschaltkreis mit einer Spannungsaufbauschaltkreiseinrichtung zum Aufbauen einer Spannung ansprechend auf eine Spannung über der Schaltereinrichtung, so daß, wenn die Triggereinrichtung die Schaltereinrichtung leitend triggert, die Spannung der Spannungsaufbauschaltkreiseinrichtung zusammenbricht, aufweist.

# EP 0 168 166 B1

**Revendications**

1. Alimentation en courant pour appliquer une tension continue de sortie à une charge (38), comprenant:

un moyen d'entrée de tension (11) pour produire une tension d'entrée;

un moyen d'accumulation de la charge et de transfert (14) pour accumuler et transférer une sortie vers une charge (38);

un moyen de commutation (SCR3) pour interconnecter sélectivement le moyen d'entrée de tension (11) et le moyen d'accumulation de la charge et de transfert (14);

un moyen de déclenchement (16) pour déclencher le moyen de commutation (SCR₃) pour interconnecter le moyen d'entrée de tension (11) et le moyen d'accumulation de la charge et de transfert (14);

un moyen de détection (22) pour détecter le courant en réponse à la tension continue de sortie à travers la charge (38);

un moyen de référence de courant compensé pour produire une référence de courant;

ledit moyen de détection (22) ayant un moyen pour comparer le courant détecté par le moyen de détection à la référence de courant; et

un moyen de signaux pour appliquer un signal basé sur la comparaison entre le courant détecté et la référence de courant au moyen de déclenchement (16) afin de modifier le déclenchement du moyen de commutation (SCR₃) et l'interconnexion du moyen d'entrée de tension (11) et du moyen d'accumulation de la charge et de transfert (14).

2. Alimentation en courant de la revendication 1 où:

ledit moyen de détection (22) comprend une première résistance (R19) prévue en communication avec la charge et un dispositif d'amplification de courant (T1) communiquant avec la première résistance (R19) et avec la masse et avec le moyen de signaux (40); et

ledit moyen de référence de courant compensé comprend un radiateur de courant connecté à la connexion entre ladite première résistance (R19) et ledit dispositif d'amplification de courant (T1).

3. Alimentation en courant de la revendication 2, comprenant:

une seconde résistance (R16) connectée entre la charge (38) et l'alimentation en courant pour détecter le courant retournant de l'alimentation en courant et provenant de la charge (38);

une troisième résistance (R18) prévue en parallèle avec la seconde résistance (R16);

le radiateur de courant comprenant un transistor communiquant avec la première résistance (R19), avec le transistor ayant une porte qui est polarisée par la tension à ladite troisième résistance (R18).

4. Alimentation en courant pour appliquer une tension de sortie à une charge, comprenant:

un moyen d'entrée de tension (11) pour produire une tension d'entrée;

un moyen d'accumulation de la charge et de transfert (14) pour accumuler et transférer une charge;

un moyen redresseur et de filtrage (20) pour recevoir la charge du moyen d'accumulation de la charge et de transfert (14) et pour appliquer une sortie à une charge (38);

un moyen de commutation (SCR3) pour sélectivement interconnecter le moyen d'entrée de tension (11) et le moyen d'accumulation de la charge et de transfert (14);

un moyen de référence pour produire une référence;

un moyen de détection (22) pour détecter la sortie et pour comparer la sortie à la référence;

un moyen de signaux pour produire un signal basé sur la comparaison entre la sortie et la référence;

un moyen de déclenchement (16) pour mettre le moyen de commutation (SCR3) en circuit pour interconnecter le moyen d'entrée de tension (11) et le moyen d'accumulation de la charge et de transfert (14);

où ledit moyen de déclenchement comprend un moyen de seuil (UJT2) pour produire un signal de seuil et un moyen (C3) pour accumuler un signal dépendant du temps à un niveau relatif au signal de seuil tel que ledit moyen de déclenchement (15) mette ledit moyen de commutation (SCR3) en circuit, où au moins l'un dudit moyen de seuil et dudit moyen pour l'accumulation d'un signal dépendant du temps (C3) est pourvu du signal du moyen de signaux; et

un moyen (D2, R7, Z1, Z2) pour synchroniser la mise en marche du moyen (C3) pour l'accumulation d'un signal dépendant du temps de manière que la mise en marche se produise en un point présélectionné sur le recycle d'oscillation de tension dans la moyen d'accumulation de la charge et de transfert (14).

5. Alimentation en courant de la revendication 4 où:

ledit moyen de synchronisation (D2, R7, Z1, Z2) met le moyen (C3) pour l'accumulation d'un signal dépendant du temps en marche au point présélectionné où la tension à travers le moyen d'accumulation de la charge et de transfert est sensiblement équivalente à la tension du moyen d'entrée de tension (11).

6. Alimentation en courant de la revendication 4 où:

ledit moyen (D2, R7, Z1, Z2) pour synchroniser la mise en marche du moyen pour l'accumulation d'un signal dépendant du temps comprend une diode (D2) prévue en parallèle avec lui qui interconnecte le moyen d'entrée de tension (11) et le moyen d'accumulation de la charge et de transfert (14) de manière que lorsque ladite diode (D2) est conductrice ledit signal dépendant du temps commence à s'accumuler.

7. Alimentation en courant de la revendication 4 où:

12

ledit moyen d'entrée de tension (11) comprend une première bobine de transformateur (L1) et un premier moyen (11) pour appliquer une tension à ladite première bobine de transformateur (L1);

ledit moyen d'accumulation de la charge et de transfert (14) comprend une seconde bobine de transformateur (L2) et un second moyen (C4) pour appliquer une tension à travers ladite seconde bobine de transformateur (L2); et

ledit moyen de commutation (SCR3) comprend un moyen pour sélectivement interconnecter ladite première bobine de transformateur (L1) audit second moyen (C4) pour appliquer une tension à travers ladite seconde bobine de transformateur (L2).

8. Alimentation en courant de la revendication 7 où:

ledit moyen de commutation comprend un thyristor (SCR3).

9. Alimentation en courant de la revendication 7 où:

ladite première bobine de transformateur (L1) et ladite seconde bobine de transformateur (L2) sont prévues sur le même noyau de transformateur.

10. Alimentation en courant de la revendication 4 où:

ledit moyen d'entrée de tension comprend une première bobine de transformateur (L1) et un premier moyen (11) pour appliquer une tension à ladite première bobine de transformateur (L1);

ledit moyen d'accumulation de la charge et de transfert (14) comprend une seconde bobine de transformateur (L2) et un second moyen (C4) pour appliquer une tension à travers ladite seconde bobine de transformateur (L2);

ledit moyen de commutation (SCR3) comprend un thyristor (SCR3) qui interconnecte sélectivement ladite première bobine de transformateur (L1) audit second moyen (C4) pour appliquer une tension à travers ladite seconde bobine de transformateur, ledit thyristor (SCR3) étant mis hors circuit quand l'accumulation de tension au second moyen (C4) pour appliquer une tension à travers ledit second transformateur (L2) est plus importante que la tension à travers le premier moyen (11) pou appliquer la tension.

11. Alimentation en courant de la revendication 4, comprenant:

un moyen (SCR1) pour ralentir la charge du moyen (14) pour l'accumulation d'un signal dépendant du temps à la mise en marche de manière que la tension du moyen de seuil puisse s'accumuler au niveau de tension de seuil pour mettre le moyen de commutation (SCR3) en circuit.

12. Alimentation en courant de la revendication 11 où:

ledit moyen (SCR1) pour ralentir la charge du moyen (14) pour l'accumulation d'un signal dépendant du temps comprend un thyristor (SCR1) prévu en parallèle avec une première résistance (R3), les deux interconnectant ledit moyen d'entrée de tension audit moyen pour accumuler un signal dépendant du temps, ledit thyristor (SCR1) comprenant une gâchette connectée à une borne de ladite première résistance (R3) laquelle borne est également connectée audit moyen (14) pour l'accumulation d'un signal dépendant du temps;

ladite première résistance (R3) ralentissant la charge du moyen (14) pour l'accumulation d'un signal dépendant du temps à la mise en marche de l'alimentation en courant jusqu'à ce que la tension à la gâchette s'accumule à un point où le thyristor est mis en circuit, by-passant la première résistance (R3).

13. Alimentation en courant de la revendication 4 où:

ledit moyen de détection (22) comprend une première résistance (R19) qui est prévue en communication avec la charge;

ledit moyen de référence comprenant un radiateur de courant connecté à ladite première résistance (R19); et

ledit moyen de détection (22) comprend de plus un dispositif d'amplification du courant (T1) communiquant avec la connexion entre le radiateur de courant et la première résistance (R19) et avec la masse et avec le moyen de signaux.

14. Alimentation en courant de la revendication 13 où ledit dispositif d'amplification de courant comprend au moins un transistor (44) dont la base communique avec l'interconnexion entre la première résistance (R19) et le radiateur de courant constant, l'émetteur connecté à une masse et le collecteur connecté audit moyen de signaux.

15. Alimentation en courant de la revendication 13, comprenant:

une seconde résistance (R16) connectée entre la charge (38) et l'alimentation en courant pour détecter le courant retournant à l'alimentation en courant en provenance de la charge (38);

une troisième résistance (R18) prévue en parallèle avec la seconde résistance (R16); et

le radiateur de courant comprenant un transistor communiquant avec la première résistance (R19), avec le transistor ayant une porte qui est polarisée par la tension à ladite troisième résistance (R18).

16. Alimentation en courant de la revendication 4, comprenant:

un moyen pour décharger le moyen pour accumuler un signal dépendant du temps quand la tension à travers ledit moyen d'accumulation de la charge et de transfert (14) est proche de la tension au moyen d'entrée de tension (11) de manière que le moyen de commutation (SCR3) reste hors circuit.

17. Alimentation en courant de la revendication 16 où ledit moyen pour décharge le moyen (C3) pour accumuler un signal dépendant du temps comprend:

une première résistance (R7) et une seconde résistance (R2);

13

un premier transistor unijonction (UJT1) dont l'émetteur est connecté au moyen de seuil et à une borne du moyen (C3) pour accumuler un signal dépendant du temps;

la première résistance (R7) connectée entre le moyen d'entrée de tension (11) et une base du premier transistor unijonction (UJT1) et ladite seconde résistance (R2) connectée entre une autre base du premier transistor unijonction (UJT1) et une autre borne du moyen (C3) pour accumuler un signal dépendant du temps.

18. Alimentation en courant pour appliquer une tension continue de sortie à une charge, comprenant:

un moyen d'entrée de tension (11) pour produire une tension d'entrée;

un moyen d'accumulation de la charge et de transfert (14) pour accumuler et transférer une sortie à une charge (38);

un moyen de commutation (SCR3) pour interconnecter sélectivement le moyen d'entrée de tension (11) et le moyen d'accumulation de la charge et de transfert (14);

un moyen de déclenchement (16) pour déclencher le moyen de commutation (SCR3) pour interconnecter le moyen d'entrée de tension (11) et le moyen d'accumulation de la charge et de transfert (14);

un moyen de référence pour produire une référence;

un moyen de détection (22) pour détecter la sortie et ayant un moyen pour comparer la sortie à la référence;

un moyen de signaux pour appliquer un signal basé sur la comparaison entre la sortie et la référence au moyen de déclenchement afin de modifier le déclenchement du moyen de commutation (SCR3) et l'interconnexion du moyen d'entrée de tension (11) et du moyen d'accumulation de la charge et de transfert (14);

où ledit moyen de déclenchement (16) comprend un circuit de déclenchement à transistor unijonction ayant un moyen formant circuit d'accumulation de la charge pour accumuler une tension en réponse à une tension à travers ledit moyen de commutation de manière que lorsque ledit moyen de déclenchement déclenche ledit moyen de commutation pour qu'il soit conducteur, la tension du circuit d'alimentation de la charge s'affaisse.

FIG.—1

FIG. — 2

FIG. — 3